# EUROPEAN PATENT APPLICATION

(11) **EP 3 772 852 A1**
(43) Date of publication of application: **10.02.2021**
(21) Application number: 19190254.3
(22) Date of filing: 06.08.2019
(51) Int. Cl.: H04N 13/214, H04N 13/257, H04N 13/282, H04N 13/218, G03B 35/12

(54) **OPTICAL ASSEMBLY, IMAGE PROCESSING APPARATUS AND METHOD FOR RECORDING AND/OR RETRIEVING A STEREOSCOPIC COLOR IMAGE WITH MULTIPLE STEREOSCOPIC CHANNELS IN A MULTISPECTRAL COLOR IMAGE**

(71) Applicant: Leica Instruments (Singapore) Pte. Ltd., 608924 Singapore (SG)
(72) Inventor: THEMELIS, George, 88131 Lindau (DE)
(74) Representative: Grünecker Patent- und Rechtsanwälte PartG mbB

(57) **Abstract**

The invention relates to an optical assembly (100), an image processing apparatus (130), a method for recording a digital multispectral color image (136) and a method for retrieving left and right stereoscopic color images (122, 124, 300, 402) from the digital multispectral color image, resulting in a highly flexible, inexpensive and easy-to-use way to generate stereoscopic color images. The multispectral color image is recorded using an optical band-pass filter (104) having filter sectors(200, 202, 302, 400) the filter sectors having different image-separating pass-bands (216). The stereoscopic color images are recorded in a color space (RGB) comprising color channels (R, G, B), wherein each color channel overlaps at least one image-separating pass-band per filter sector. An image sensor (112) or a camera (113) comprises spectral bands (224) at each pixel (148) that match the image-separating pass bands, thus allowing to encode the stereoscopic channels in a multispectral color image. The image processing apparatus is configured to extract the stereoscopic color images from the digital multispectral color image.

## Description

The invention relates to an optical assembly, as well as to an image processing apparatus and method for use in particular in the field of microscopy and endoscopy.

There is a need for recording and/or rendering optically observed objects in three-dimensions to give an observer a three-dimensional understanding of what he or she observes.

One way to record and/or render objects three-dimensionally is to use stereoscopy, which uses the binocular disparity of a binocular observer in order to render three dimensional objects. However, current stereoscopic devices are not very flexible in their use. The are expensive and cumbersome to calibrate.

It is therefore the object to provide components of a more flexible and less cumbersome stereoscopic device that is not expensive.

One aspect which addresses this object is an optical assembly configured to record a digital multispectral color image in a color space having a number of predetermined color channels, the digital multispectral color image comprising at least one stereoscopic left and one stereoscopic right image in a color space, the color space having a number of predetermined color channels; the optical assembly comprising an optical band-pass filter, the band-pass filter comprising at least two filter sectors in different regions of the band-pass filter; each of the at least two filter sectors comprising a sector set of different image-separating pass-bands; wherein each color channel overlaps an image-separating pass-band of each of the sector sets; and wherein the image-separating pass-bands of different filter sectors that overlap with the same color channel are different.

Another aspect which addresses this object is an image processing apparatus, wherein the image processing apparatus is configured to retrieve a digital multispectral color image recorded by the optical assembly, the image processing apparatus being configured to obtain a left digital stereoscopic color image from a first set of spectral bands of the digital multispectral color image and a right digital stereoscopic color image from a second set of spectral bands of the digital multispectral color image, the second set of spectral bands being different from the first set of spectral bands.

Moreover, the object is addressed by an optical observation device, such as a microscope or endoscope, wherein the optical observation comprises an optical assembly and/or an image processing apparatus as described above.

Another aspect to address the object is to provide a method of recording a digital multispectral color image, the digital multispectral color image comprising a left and a right stereoscopic color image, each in a color space having a number of predetermined color channels; wherein the left stereoscopic color image is recorded in a first set of spectral bands and the right stereoscopic color image is recorded in a second set of spectral bands; wherein the spectral bands of the first set of spectral bands are different from the spectral bands of the second set of spectral bands; and wherein each color channel overlaps a different spectral band of the first set of spectral bands and each color channel overlaps a different spectral band of the second set of spectral bands.

Further, the above object is addressed by a method of generating a left stereoscopic color image and a right stereoscopic color image from a digital multispectral color image comprising pixels and a predetermined number of spectral bands at each pixel, the left and the right stereoscopic color images being composed in a color space with predetermined color channels; the method comprising the steps of: retrieving the digital multispectral color image; obtaining the left stereoscopic color image from a first set of spectral bands of the digital multispectral color image; obtaining the right stereoscopic color image from a second set of spectral bands of the digital multispectral color image, the second set being differentfrom the first set; mapping the spectral bands to the color channel of the color space of the left and the right stereoscopic color image.

Finally, the object is addressed by a computer program with a program code for performing the above method of generating a left stereoscopic color image and a right stereoscopic color image from a digital multispectral color image, when the computer program runs on a processor.

The above aspects are all based on encoding the stereoscopic channels of a stereoscopic color image in a digital multispectral color image and on reconstructing the stereoscopic color image from the multispectral color image. The optical band-pass filter transforms the positional information of the light bundles traversing it and constituting the stereoscopic channels, into a spectral information. As every color channel of the color space is represented in each stereoscopic channel, the color quality is very high. The computational effort for retrieving the stereoscopic channels from the digital multispectral color image is low.

Due to the color filter and its segmentation into different filter sectors, a single, monocular, multispectral camera together with the relatively inexpensive optical band-pass filter may be used to generate a stereoscopic color image. Such a set-up does not require a complicated calibration as the stereoscopic channels are simply generated by passing the optical band-pass filter. The optical assembly is thus easy and inexpensive to use.

The term 'multispectral' here includes both multispectral and hyperspectral.

As a color space, any color space may be used, such as a RGB, sRGB, CMYK, YIQ, YUV, YPbPr, xvYCC, HSV, HSL. However, a color space with color channels based on wavelength is preferred. In such a case, a color channel and/or a spectral band may correspond to a primary color. In the RGB color space, for example, the primary colors that are represented by the color channels are red, R, blue, B, and green, G.

In the following, additional features which further improve the above aspects are described. Each of the additional features is advantageous on its own and may be independently combined with any one of the other additional features. All features may be equally applied to the optical assembly, to the image processing apparatus and to any of the methods, as appropriate.

If, for example, the optical band-pass filter is supported rotatably in or by the optical assembly, the orientation of the stereoscopic channels may be changed easily.

The optical assembly may comprises an objective, the objective having an optical path, and wherein the band-pass filter may be located within the objective in the optical path. Arranging the band-pass filter in the objective allows to adapt the optics to the design of the optical filter and its properties. In particular, the band-pass filter may be located in the focal/aperture plane of the objective, to most efficiently encode the stereoscopic viewing angle into spectral information. The objective may be a standard objective or have the optical set-up of a standard objective, e.g. a standard, monocular, microscope or endoscope objective.

In one embodiment, the optical band-pass filter may be supported in or by the optical assembly or in or by the objective to be repeatedly removable and/or exchangeable from outside the optical assembly, preferably in a toolless manner. This allows to remove the optical band-pass filter quickly, so that the optical assembly may be easily converted into a mode where regular, non-stereoscopic or monocular, multispectral color images are recorded. In particular, the band-pass filter may be adapted to be removed and remounted repeatedly from the objective while the objective remains in an operating condition. This may be facilitated if the optical filter is e.g. held in a magazine, adapter or cassette that can be easily inserted into and removed from the objective.

According to an embodiment, each sector set may be configured to define and/or being assigned to a different one of the at least two stereoscopic color part-images. The filter sector encode positional information about the light rays in particular in the image plane into spectral information, thus assigning each stereoscopic viewing angle a different set of wavelength.

According to a further embodiment, 2, 3 or 4, or more, filter sectors may be provided. Each filter sector creates a different stereoscopic left or right image. This allows to record a stereoscopic color image that has more than two stereoscopic channels. This is useful if there are two observers that have a different viewing position such as, for example, in surgical microscopes or endoscopes, where a surgeon and one or more assistants are observing the object. Using a filter with more than two filter sectors allows to provide a stereoscopic color image for each observer with better aligned stereoscopic viewing angles.

In order to be able to restore the stereoscopic color image from the digital multispectral color image in the optimum quality, it is preferred that each pixel of the digital multispectral color image contains the or, more preferred, all spectral bands of each the left and the right stereoscopic color image and any further left or right stereoscopic color image.

According to another embodiment, the number of image-separating pass-bands in a sector set is at least as large as the number of color channels. This allows to represent every color channel in each of the stereoscopic left and right images. It is also possible that a color channel is represented by a plurality of image-separating pass-bands in the left and/or right color channels. This leads to a more accurate rendition of colors in the stereoscopic color image.

In view of at least being able to render the stereoscopic color image in a simple color space, such as RGB, it may be preferred that each sector has at least three image-separating pass-bands.

In general it is sufficient if, according to one embodiment, there is on image-separating pass-band per filter sector per color channel. In such a case, each pass-band of a sector set may overlap a different color channel. In this embodiment, the image-separating pass bands are allowed to have a higher bandwidth. Thus, sensor sensitivity in the different image-separating pass-bands is increased.

However, it can be advantageous if there is more than one image-separating pass-band per filter sector per color channel, in particular if this plurality of image-separating pass-bands per filter sector per color channel is distributed evenly across the color channel. This allows to represent more exactly each of the color channels in each of the stereoscopic left and right images.

In order to record the left and the right stereoscopic color images using the same light conditions, the at least two filter sectors should be of the same area.

To use the maximum light for recording the stereoscopic color image, it is preferred that the filter sectors cover or use the entire aperture of the optical band-pass filter. In particular, the at least two filter sectors may occupy the entire light-filtering area of the band-pass filter, so that the entire area of the optical band-pass filter is used.

If each filter sector occupies a contiguous area of the band-pass filter, as provided in one embodiment, the stereoscopic viewing angles are rendered at optimum quality and accuracy.

It is further preferred that the filter sectors are non-overlapping to have a clear separation of the stereoscopic viewing angles.

According to an embodiment, the image-separating pass-bands of different filter sectors that overlap with the same color channel may have the same bandwidth. This makes post-processing easy, as each image-separating pass-band has the same sensitivity.

Cross-talk between the left and right stereoscopic color images may be reduced if the image-separating pass-bands of different filter sectors overlapping the same color channel do not overlap.

In this context, an overlap of less than ±15 % of the bandwidth may still be considered as constituting no overlap. Further, an overlap in an area where transmissivity of the respective image-separating pass-band has dropped by 8 dB or more may not considered as an overlap. In these cases, there is no significant contribution to crosstalk.

To ensure that all color channels can be encoded, the number of different image-separating pass-bands of the band-pass filter that overlap with the same color channel may be at least as large the number of filter sectors.

According to another embodiment, each color channel may be evenly split into a set of image-separating pass-bands, each image-separating pass-band of this set being a part of a different sector set, to ensure symmetry and equal recording conditions for each of the left and right stereoscopic color images.

In order to make full use of the available wavelengths, it may be provided that the image-separating pass-bands of different filter sectors overlapping the same color channel together take up the entire bandwidth of this same color channel.

According to another embodiment, the optical assembly may comprise a plurality of different band-pass filters, each of the plurality having at least one of a different number of filter sectors and a different sector set of image-separating pass-bands. The optical assembly is preferably configured to allow an exchange of different band-pass filters against one another toollessly and repeatedly. This allows to adapt the optical assembly to various operating requirements, e.g. to switch from an optical assembly which offers only two stereoscopic channels to an optical assembly that offers three or four stereoscopic channels. Each or some of the plurality of different band-pass filters may be configured for the same color space, so that the post-processing may not require too much adaptation after a filter change.

In another embodiment, the optical assembly further may comprise an image sensor configured to record the digital multispectral color image in the color space, the image sensor comprising a plurality of spectral bands, each of the different image-separating pass-bands of the band-pass filter overlapping a different spectral band. The image sensor is configured to record the light in the spectral bands. Each pixel contains preferably all the spectral bands.

According to another embodiment, the optical assembly may comprise a multispectral camera that comprises the image sensor.

The camera may be configured to record data about the color space and/or the color channels of the digital stereoscopic color image in the digital multispectral color image. These data may be used for reconstructing the left and right stereoscopic color images from the digital multispectral color image. Preferably, the multispectral camera or the image sensor, respectively, comprises at least six spectral bands.

The number of spectral bands of the image sensor may be at least as large as the number of pass-bands of the band-pass filter. This ensures that each image-separating pass-band is recorded by a matching spectral band.

Further, each color channel of the color space of the digital multispectral color image may overlap a number of different spectral bands, the number being one of equal to or larger than the number of filter sectors. This ensures that for each of the left and right stereoscopic color images that are encoded in the digital multispectral color image the spectral bands represent all color channels and thus are able to represent the color space.

In general, the conditions for the spectral bands mirror those for the image-separating pass-bands, as each the light filtered by each of the different image-separating pass-bands is to be recorded by a matching different spectral band of the image processor. Thus, reference can be made to the various conditions formulated above for the image-separating pass-bands, which apply mutatis mutandis to the spectral bands.

Nonetheless, some of the above criteria are explicitly restated for the spectral bands to give an example.

For example, each color channel of the color space may be evenly split into the spectral bands.

Further, the spectral bands overlapping the same color channel have equal bandwidths.

In another embodiment, the spectral bands may have smaller bandwidths than the color channels of the color space.

Each color channel of the color space may comprise the same number of spectral bands.

For reconstructing the left and right stereoscopic color image from the digital multispectral color image, the image processing apparatus may be used. The image processing apparatus may be a separate device remote from the optical assembly, or it may be combined with the optical assembly into a single device such as a medical observation device. The image processing apparatus may be made entirely from software, entirely from hardware, or from a combination of both hardware and software.

In one embodiment, the image processing apparatus may be configured to separate at least one of at least one further left and at least one further right stereoscopic color image from the digital multispectral color image using a further set of spectral bands, the spectral bands of the further set being different from the spectral bands of the first and second set. This allows to display more than two stereoscopic channels to multiple observers.

The digital multispectral color image may comprise color space data representative of the color space it was recorded in an/or the spectral bands. This data may be used for the reconstruction of the left and right stereoscopic color images. Instead of encoding these data in the multispectral color image, they may simply be used as an implicit standard shared by the optical assembly and the image processing apparatus. Additionally or alternatively, the data may be retrieved individually and/or separately by the image processing apparatus.

The multispectral color image may comprise one or more spectral bands per left or right stereoscopic color image per color channel, which the image processing apparatus is configured to identify. The spectral bands of the multispectral color image satisfy the same conditions as the image-separating pass bands of the optical band-pass filter and the spectral bands of the image sensor.

In general, the function of the image processing apparatus mirrors the function of the band-pass filter, The image processing apparatus restores the positional information as represented by left and right stereoscopic color images from the spectral information encoded in the multispectral color image. Thus, the image processing apparatus assigns to a set of spectral bands in the digital multispectral color image, which set corresponds to a set of image-separating pass-bands of one filter sector, a stereoscopic channel.

Regarding the above recording method, the digital multispectral color image may be recorded in a color space comprising a predetermined number of color channels, wherein each of the spectral bands of the left digital stereoscopic color image overlaps a color channel of the digital image and each of the spectral bands of the right digital stereoscopic color image overlaps a color channel of the digital image, and wherein the spectral bands of the left digital stereoscopic color image are different from the spectral bands of the right digital stereoscopic color image.

Herein, the left and right stereoscopic color images may be composed in a color space having color channels, the color channels overlapping at least one spectral band in each of the first and the second set, the spectral bands overlapping the same color channel being different in the first and second set.

Each color channel may overlap with at least one spectral band in the left digital stereoscopic color image and each color channel may overlap with at least one spectral band in the right digital stereoscopic color image.

Further, the first set of spectral bands may match the image-separating pass-bands of a first filter sector of the band-pass filter and the second set of spectral bands may match the image-separating pass-bands of a second filter sector of the band-pass filter.

The optical observation device is configured to separate at least one of at least one further left and at least one further right stereoscopic color image from the digital multispectral color image using a further set of spectral bands, the spectral bands of the further set being different from the spectral bands of the first and second set. The further set of spectral bands may comprise spectral bands that lie within different color channels.

After having been reconstructed from the multispectral color image, the left and the right stereoscopic color images may be displayed or be further processed. For displaying the left and the right stereoscopic color images, the observation device may comprise at least one stereoscopic display.

In the following, exemplary embodiments of the solution will be described with reference to the drawings. The same reference numeral is used for elements that correspond to one another with respect to structure and/or function.

In line with the above general description of the invention, a feature which is not present in an embodiment of the drawings may be added if the technical effect of this feature is advantageous to the application of the embodiment. Mutatis mutandis, a feature which is described in connection with an embodiment of the figures may be omitted if the technical effect related to this feature is not needed for a particular application of the embodiment.

In the figures:
- Fig. 1: shows a schematic representation of an embodiment of an optical observation device comprising an optical assembly;
- Fig. 2: shows a schematic representation of another embodiment of an observation device and an optical assembly;
- Fig. 3: shows a schematic representation of another embodiment of an optical observation device and an optical assembly;
- Fig. 4: shows a schematic representation of another embodiment of an observation device and an optical assembly;
- Fig. 5: shows a schematic representation of an arrangement of image-separating pass-bands;
- Fig. 6: shows a schematic representation of a flow chart for a method for recording left and right digital stereoscopic color images in a digital color image ;
- Fig. 7: shows a schematic representation of a flow chart for a method of obtaining left and right stereoscopic color images from a digital color image.

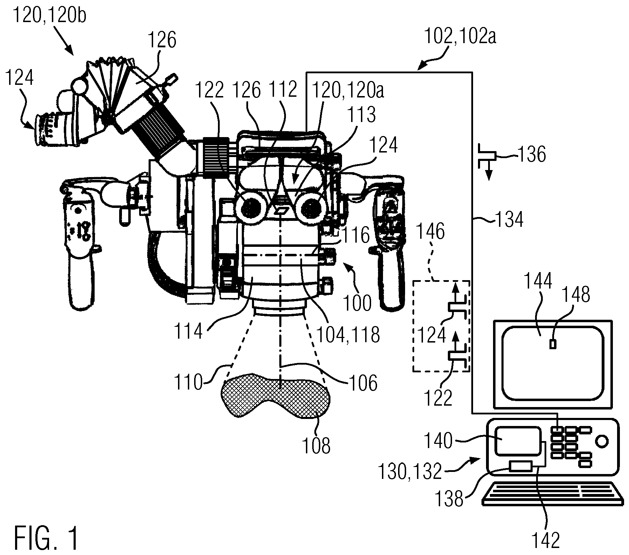

First, the structure of an optical assembly 100 is explained with reference to Fig. 1. The optical assembly 100 may be part of an observation device 102, such as a microscope 102a or, not shown, an endoscope.

The optical assembly 100 comprises an optical band pass-filter 104, which is arranged in an optical path 106 of the optical assembly 100. The optical path extends from an object 108 which is to be investigated by e.g. the observation device 102 and which is located in a field of view 110 of the optical assembly 100 to an image sensor 112. The image sensor 112 may be part of a camera 113. The optical assembly 100 may further comprise an objective 114. Preferably, the band-pass filter 104 is arranged in an image plane or aperture plane 116 of the optical assembly 100 or of the objective 114.

In order to be easily exchangeable, the band-pass filter 104, or a holder 118, which serves as an adapter for exchangeably holding and preferably also centering the band-pass filter 104 in the optical assembly 100, is accessible from outside the objective 114. Thus, the band-pass filter 104 may be exchanged for another band-pass filter 104, while the objective 114 for the optical assembly 100 is still operable.

The observation device 102 may comprise one or more stereoscopic viewers 120 for viewing a stereoscopic color image which may have been recorded by the image sensor 112. The stereoscopic color image is preferably a color image and comprises a left stereoscopic color image 122 and a right stereoscopic color image 124. As the left stereoscopic color image 122 and the right stereoscopic color image 124 together constitute a stereoscopic color image, they are referred to jointly as a 'stereoscopic color image'.

Further, the left stereoscopic color image constitutes a left stereoscopic channel and the right stereoscopic color image constitutes a right stereoscopic channel. The left and right stereoscopic color image 122 may be displayed by a stereoscopic display 126 which may be integrated in the stereoscopic viewer 120. The display 126 may comprise one or more LED, LCD or OLED screens. The stereoscopic color images that are displayed by the different stereoscopic viewers 120 may be different. In the case of a surgical microscope or endoscope, the different stereoscopic viewers 120 may be binocular viewers.

An image processing apparatus 130, such as a general-purpose computer 132 may be provided. The image processing apparatus may be connected via a data exchange line 134 to the optical assembly 100. The image processing apparatus 130 may be part of the observation device 102, or be a separate part, which is located at a different location than the observation device 102. The data exchange line 134 may be a wired line or a wireless connection and be bidirectional. For example, a digital color image 136 which comprises the left and the right stereoscopic color image 122,124 and which was recorded by the image sensor 112 may be output via the data exchange line 134 to the image processing apparatus 130.

The digital color image 136 may be input into the image processing apparatus 130 and be processed there, for example by an image processor 138. The image processor 138 may be a hardware device, such as a CPU, GPU, floating-point processor, vector processor, graphics processor or an array, a software device, such as one or more sub-routines, or any combination thereof. The color image 136 may be stored in the image processing apparatus 130 in a storage device 140, such as volatile or non-volatile memory, e.g. a disc or SSD drive, RAM or ROM memory, cache memory and the like. The image processor 138 may be configured to retrieve the digital color image 136 from the storage device 140 via one or more data lines 142 internal to the image processing apparatus 130. The image processing apparatus 130 may further comprise a display 144, which may be stereoscopic, such as a color monitor or virtual reality goggles.

The image processing apparatus 130 is configured to obtain at least two stereoscopic color part-images 122, 124 from the color image 136. The left and the right stereoscopic color image 122, 124 may be at least temporarily stored in the storage device 140. The left and the right stereoscopic color image 122, 124 may be sent via the data exchange line 134 to the one or more stereoscopic displays 126. Different stereoscopic color part-images 122, 124 may be sent selectively to a stereoscopic viewer 120, e.g. by embedding an address of a stereoscopic viewer 120 within the left stereoscopic color image 122 and/or the right stereoscopic color image 124. Only the stereoscopic viewer 120 that is addressed will display the respective and/or right stereoscopic color image. Of course, the left and the right stereoscopic color image may be combined into a single digital stereoscopic color image 146, forming two channels of the digital stereoscopic color image 146.

In the image processing apparatus 130, the color image 136, digital stereoscopic color image 146, the left stereoscopic color image 122 and the right stereoscopic color image 124 are represented by discrete-valued digital arrays, which may be two-dimensional. As the images 124, 126, 136, 146 are color images, they include color information for each pixel 148. The color information for each pixel 148 may be encoded as color channels of a color space. Each color channel may represent a primary color. The color channel represent coordinates in color space. If, for example, an RGB color space is used, a red (R) color channel, a green (G) color channel and a blue (B) color channel are used. The three color channels at each pixel 148 represent the brightness information for each of the primary colors R, G and B.

A color channel in this context is the grey scale image that has the same size as the color image but is composed of just one primary color. Different color spaces besides R, G and B exist, such as YUV, CMYK, and HSV.

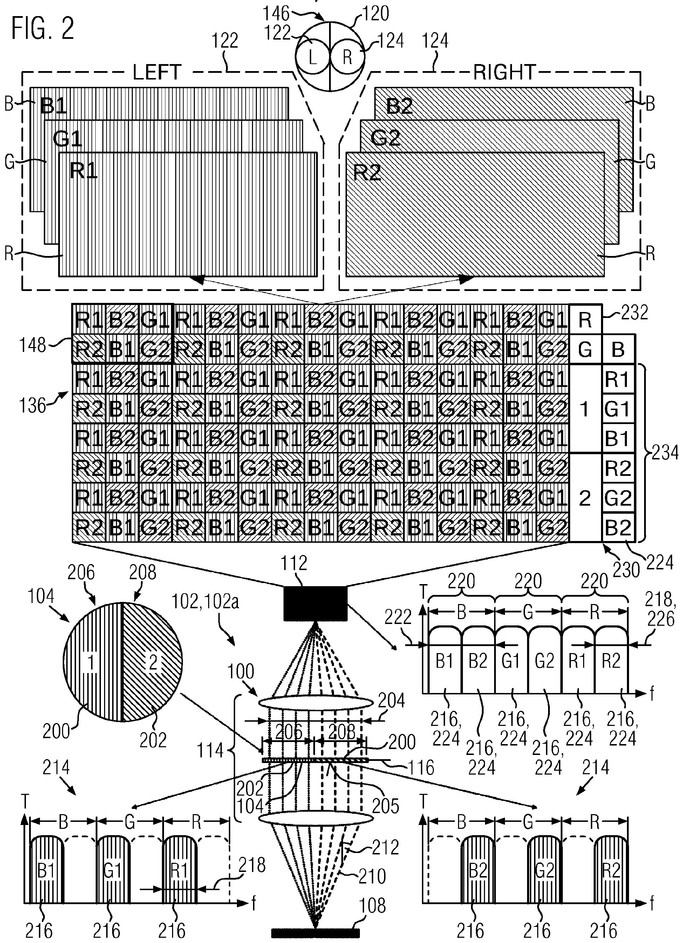

With reference to Fig. 2, it is explained how a stereoscopic color image 146 recorded is in and retrieved from the (non-stereoscopic) color image 136 by using the band-pass filter 104. The band-pass filter 104 converts information about a location in the image or aperture plane 116 into spectral information.

The function and structure of the band-pass filter is explained in the following with reference to an RGB color space. However, any other type of color space can be used instead.

The band-pass filter 104 comprises at least two filter sectors. In the embodiment of Fig. 2, two filter sectors 200, labeled in Fig. 2 as "1" and 202, labeled as "2" are shown. As is explained below, more than two filter sectors 200, 202 may be provided. Preferably, each of the filter sectors 200, 202 occupies a contiguous area of the band-pass filter 204.

The at least two filter sectors 200, 202 are preferably of the same area. Further, the filter sectors 200, 202 are preferably non-overlapping. Further, preferably, the filter sectors cover the entire aperture 204 of the objective 114 in the image or aperture plane 116 or at least an entire light-filtering area 205 of the band-pass filter 104. As shown in Fig. 1, each sector 200, 202 may occupy one half of the circular light-filtering area 205.

As the filter sectors are in different regions 206, 208 of the band-pass filter 104, each of the filter sectors filters a different part of the bundle of light beams 210 passing through the band-pass filter 104. With two filter sectors of the same area, one half of the light beams 210 passes through the filter sector 200, the other half passes through filter sector 202. The light beams 210 that pass through filter sector 200 have a viewing angle 212 that has the opposite sign compared to the light beams 210 that pass through the other filter sector 202. Thus, the totality of light beams that pass through filter sector 200 can be interpreted as constituting a first channel of a stereoscopic part image, e.g. the left stereoscopic color image. The totality of light beams 210 passing through the filter sector 202 can be interpreted as constituting the other, e.g. right stereoscopic part image.

Uniquely identifying through which of the filter sectors a light beam 210 has passed, each of the at least two filter sectors comprises a sector set 214 of different image-separating pass-bands 216. The sector set 214 represents the totality of image-repeating pass-bands 214 in one filter sector. Thus, once the band-pass filter 104 has been passed, the spectral content of the light beams 210 determines whether the light beam 210 has passed through filter sector 200 or filter sector 202.

The image-separating pass-bands 216 of sector set 214 of filter sector 200 are labeled as B1, G1, R1 in Fig. 1. The filter sector 202 comprises the sector set 214 with image-separating pass-bands 216 labeled as B2, G2, R2. Preferably, the image-separating pass-bands of the band-pass filter 104 do not overlap, allowing for a unique identification of the filter sector 200, 202 through which the light beam 210 has passed and reducing any cross-talk between the filter sectors. In Fig. 2, the image-separating pass-bands 216 are schematically shown as filter bands, in which the transmissivity T at certain light frequencies F is increased.

As, from the light beams 210 passing through the different filter sectors 200, 202 respectively, a different right stereoscopic color image needs to be reconstructed, each color channel, here R, B, G needs to be at least partly preserved and present in the light that has passed through each filter sector 200, 202. Consequently, each image-separating pass-band 216 of a sector set 214 should overlap a different color channel R, G, B. Thus, image-separating color channel B1 overlaps color channel B of the color space of the color image that is to be recorded. Image-separating color channel G1 overlaps with color channel G and image-separating color channel R1 overlaps with color channel R. The same holds *mutatis mutandum* for the color channels B2, G2 and R2 of the other filter sector 202, which also overlaps the color channels R, G, B, respectively.

To avoid cross talk between the two filter sectors 200, 202, the image-separating pass-bands 216 of different filter sectors 200, 202 that overlap with the same color channel R, G, B are different. In other words, image-separating B1 and B2 that both overlap with color channel B are different and preferably non-overlapping. A ±15% overlap with respect to the bandwidth of the image-separating pass-bands is considered as no overlap. Further, an overlap in a spectral area where transmissivity of the respective image-separating pass-band 216 has dropped by more than 8 dB is not considered as an overlap. In these two cases, there will be no significant to crosstalk, so that the unique identification of the filter sectors will not be impaired. To be able to fully represent the sector space, the number of image-separating pass-bands 216 in a sector set 214 should be at least as large as the number of color channels R, G, B of the digital stereoscopic color image to be recorded.

More than one image-separating pass-band 214 per filter sector 200, 202 and per color channel R, G, B may be used. In this case, a color channel R, G, B in a filter sector 200, 202 may overlap more than one image-separating color channel.

In order to have comparable color intensities in the image-separating pass-bands 216 after filtering, it is preferred that the image-separating pass-bands 216 of different filter sectors 200, 202 that overlap with the same color channel 200, 202 have the same bandwidth 218. For example, each color channel R, G, B may be evenly split with regard to bandwidth 218 into a channel set 220 of image-separating pass-bands, each image-separating pass-band of the channel set 220 being a part of a different sector set 214. A channel set 220 is the set of image-separating pass-bands that overlap the same color channel. Image-separating pass-bands 216 of different filter sectors 214 that overlap the same color channel R, G, B preferably together take up the entire bandwidth 222 of this same color channel R, G, B.

The light filtered by the band-pass filter 104 is recorded by the image sensor 112. The image sensor 112 is a multispectral color image sensor that records an image in a plurality of, e.g. at least six, spectral bands 224. At least some of these spectral bands 224 of the image sensor correspond or overlap to the image-separating pass-bands 216. The image-sensor 112 may comprise more spectral bands 224 than there are image-separating pass-bands 216 in the band-pass filter 104, but there is a different spectral band 224 for each of the image-separating pass-bands. Preferably, the number of spectral bands 224 of the image sensor 112 is equal to the number of image-separating pass-bands 216 and the bandwidth 226 of a spectral band 224 of the image sensor 112 corresponds to the bandwidth 218 of the matching image-separating pass-bands 216. This ensures that the capabilities of the image sensor 112 are fully used. The spectral bands 226 and their bandwidth 226 may be adjusted by filters in the image sensor 112.

Preferably, the same requirements apply for the spectral bands 224 of the image sensor 112 as for the image-separating pass-bands 216 of the band-pass filter 104. This is because the image sensor 112 should record accurately and separately the intensity in each of the image-separating pass-bands 216.

For example, each color channel R, G, B of the color space R, G, B is preferably evenly split into the spectral bands 224 of the image sensor 112. The spectral bands 224 overlapping the same color channel R, G, B have preferably equal bandwidths 226; each spectral band 224 of the image sensor 112 may have equal bandwidths 226. In the embodiment shown in Fig. 2, the image sensor 112 comprises six spectral bands R1, R2, B1, B2, G1, G2 which correspond to the image-separating pass-bands B1, B2, G1, G2, R1, R2.

In the color image 136, each pixel 148 comprises all six spectral bands 226. Thus, in the format exemplarily shown in Fig. 2, the left stereoscopic color image 122 may be retrieved from the color image 136 by extracting the spectral bands 216 that correspond to the image-separating pass-bands 216 of one filter sector, here the filter sector 200. Thus, by using, in the embodiment of Fig. 2, the spectral bands R1, G1, B1, the left stereoscopic color image 122 can be generated as a color image, as each color channel R, G, B is represented. The same applies to the right stereoscopic color image 124, which may be obtained from the color image 136 by extracting, for each pixel 148, only those spectral bands 224 that correspond to the image-separating pass-bands 216 of the filter sector 202, i.e. spectral bands R2, B2, G2.

The retrieval and display of the stereoscopic left and right color image 122, 124 may be performed in real time by the observation apparatus 102, in particular by using the image processor 138. The image processor 138 may be configured to extract from the color image 136 the spectral bands 224 that correspond to the image-separating pass-bands of a sector set 214 for a respective left or right stereoscopic color image. Thus, in the stereoscopic viewer 120, a live image of the object 108 may be viewed stereoscopically. The image processor 138 may be further configured to process the left and right stereoscopic color image, e.g. perform contrast enhancement and/or preform pattern recognition and highlight recognized patterns in pseudo colors.

Alternatively or additionally, the image processing apparatus 130 (Fig. 1) may be configured to retrieve the color image 136 from the storage device 140 and generate the left and right stereoscopic color image from a stored or archived color image 136.

In addition to the spectral bands, the color image 136 may comprise information 228, which allows the decoding of the color image 136 into the left stereoscopic color image 122 and the right stereoscopic color image 124. For example, a data set 232 representing and/or identifying the color space of the left and the right stereoscopic color image 122, 124 may be included in the color image 136. Additionally or alternatively, a data set 234 representing and/or identifying the assignment of the spectral bands 224 to the left and right stereoscopic color image 122, 124 may also be comprised. The data set 232, 234 can also be separate from the color image 136, e.g. be part of general set-up data of the observation device 102.

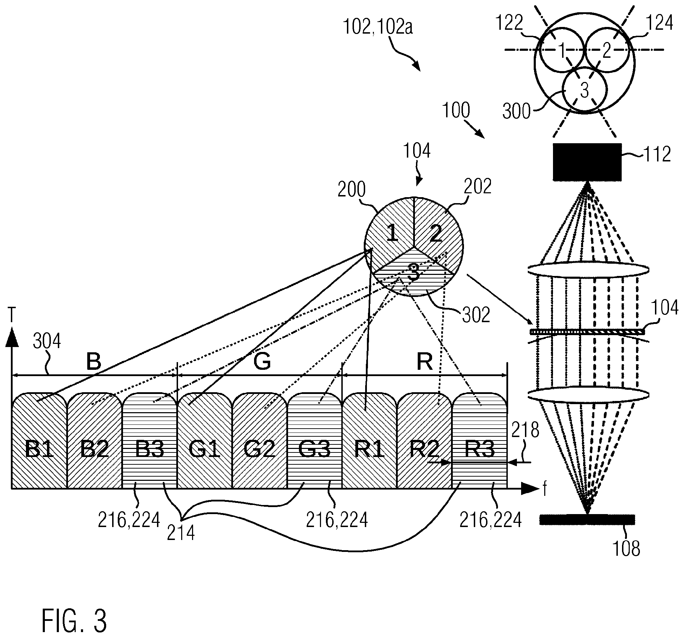

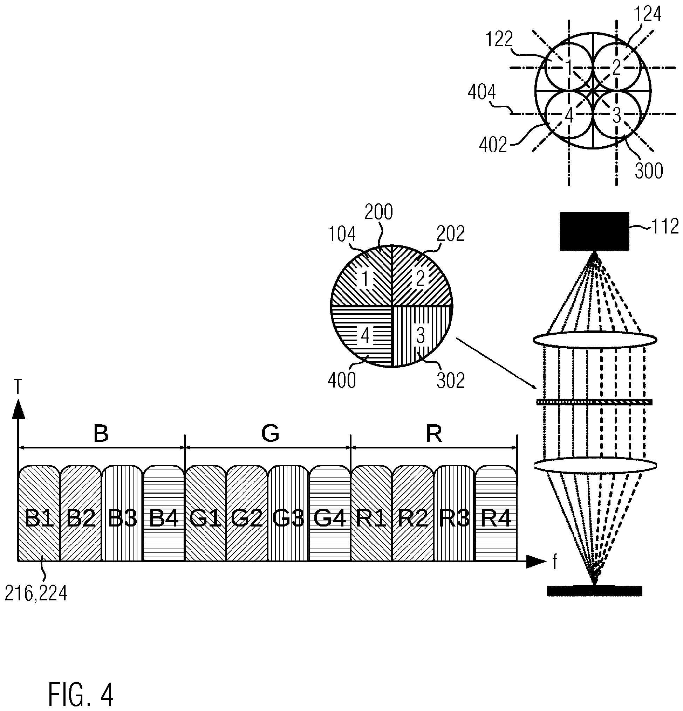

The concept explained with reference to Fig. 2 may be expanded to encode more than two stereoscopic channels. This is explained with reference to Figs. 3 and 4.

In Fig. 3, an embodiment encoding three stereoscopic color images, i.e. a left stereoscopic color image 122 and a right stereoscopic color image 124 as well as a further, left or right, stereoscopic color image 300 is shown. This allows composing stereoscopic color images that have more than one spatial perspective onto the object 108. For example, the left stereoscopic color image 122 and the further stereoscopic color image 300 as a right stereoscopic color image may be combined. Another view be generated using the left stereoscopic color image 122 and the right stereoscopic color image 124. A third view may be generated from using the right stereoscopic color image 124 and the further stereoscopic color image 300 as left stereoscopic color image. This allows to adjust the perspective of the stereoscopic color image to the actual position of the observer relative to the object 108. For example, an observer using the stereoscopic viewer 120a in Fig. 1 may be presented with the left stereoscopic color image 122 and the right stereoscopic color image 124. An observer using the stereoscopic viewer 120b of Fig. 1, which is arranged at an angle with respect to the stereoscopic viewer 120a, may be presented with the left stereoscopic color image 122 and the right stereoscopic color image 300. Each of the observers thus has a more natural perspective of the object 108.

According to Fig. 3, the band-pass filter 104 may have a further filter sector 302 having a further filter set 214 of image-separating pass-bands 216, labeled here as B3, G3, R3. For the filter sectors 200, 202, 302, the sector sets 214, and the image-separating pass-bands 216, the same rules apply as for the band-pass filter 104 having two filter sectors 200, 202 as described above with reference to Fig. 2.

As the color channels R, G, B retain their bandwidth 304, the bandwidth 218 of the image-separating pass-bands 216 becomes smaller than in the embodiment of Fig. 2 as each color channel R, G, B is preferably evenly split into a greater number of image-separating pass-bands 216.

The image sensor 112 in the embodiment of Fig. 3 again comprises spectral bands 224 that match the image-separating pass-bands 216. The increased number of stereoscopic channels requires not only an increased number of image-separating pass-bands 216 but also a corresponding increase in the number of spectral bands 224. For the spectral bands 224 and their relation to the image-separating pass-bands 216 as well as to the color channels R, G, B, the same criteria apply as mentioned with reference to the embodiment of Fig. 2.

The stereoscopic color images 122, 124, 300 are extracted in the same manner as described above with reference to Fig. 2, only that the further stereoscopic color image 300 with its color channels R, G, B is extracted from the information encoded in the additional spectral bands B3, G3, R3 for each pixel 148.

As shown in Fig. 4, using a band-pass filter 104, which comprises four filter sectors 200, 202, 300, 400 may be used to generate, in addition to the left stereoscopic color image 122, the right stereoscopic color image 124 and the further stereoscopic color image 300, another stereoscopic color image 400. This allows composing five different pairs of stereoscopic color images as indicated by the lines 404.

Again, for the filter sectors 200, 202, 300, 400, their sector sets 214 and the image-separating pass-bands 216 as well as the spectral bands 224 of the image sensor 112, the same criteria apply as for the embodiments of Fig. 2 and Fig. 3. The only difference is that in each color channel R, G, B at least one additional image separating pass-band 216 and one corresponding spectral band 224, labeled here as B4, G4, R4 is added. This reduces the available bandwidth for the image-separating pass-bands 216 of the other filter sectors 200, 202, 300.

Generally, the number of different image-separating pass-bands 216 of the band-pass filter 104 that overlap with the same color channel R, G, B is at least as large as the number of filter sectors 200, 202, 300, 400. As shown in the embodiment of Fig. 2, if there are two filter sectors 200, 202, at least two different image-separating pass-bands are located in each color channel. In the embodiment of Fig. 3 comprising three filter sectors 200, 202, 300, at least three different image-separating pass-bands are located in each color channel. In the embodiment of Fig. 4, comprising four filter sectors 200, 202, 300, 400, four different image-separating pass-bands are located in each color channel.

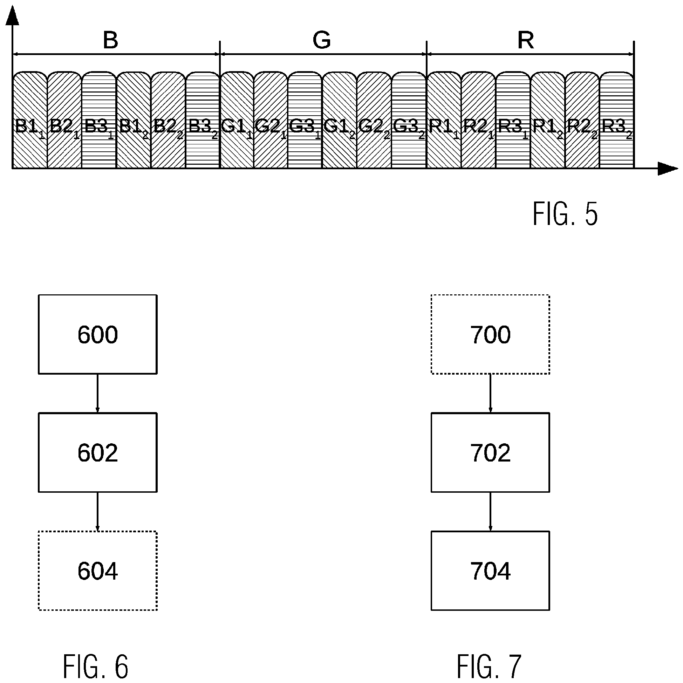

As shown in Fig. 5, a filter sector 200, 202, 300, 400, may comprise, in a color channel R, G, B, more than one image-separating pass-band 216. The image-separating pass-bands 216 of one filter sector may be separated from one another by the image-separating pass-bands of the other filter sectors. For example, filter sector 200 may comprise two separate pass-bands B1₁ and B1₂ in color channel B. Filter sector 202 may use the image-separating pass-bands B2₁ and B2₂. Filter sector 300 may use the image-separating pass-bands B3₁ and B3₂ in color channel B. The same may hold for the other color channels G and B. Such a set up may be advantageous for making better use of the spectral bands 224 of a given image sensor 112. Alternatively or additionally, two or more image-separating pass-bands that are adjacent to each other, with respect to frequency f may correspond to a single spectral band 224. In such a case, a single spectral band 224 of the image sensor 112 records the light passing through more than one image-separating pass-band 216 of a filter sector in a color channel.

The schematic flow chart of Fig. 6 exemplarily describes the method for recording the digital multispectral color image 136 with at least two embedded left and right stereoscopic color images 122, 124. In a first step 600, a bundle of light beams 210 from an object 108 under investigation is filtered using at least two different sector sets 214 of image-separating pass-bands 216. Each sector set is applied in a different, contiguous and equally large region 206, 208 in the image or aperture plane of an optical assembly 100. For the image-separating pass-bands 216, their relation to each other and to color channels of a color space, the above-mentioned applies.

In step 602, the filtered bundle of light beams 210 is recorded in a single multispectral color image 136. The multispectral color image 136 preferably comprises at least six spectral bands. Preferred relationships between the spectral bands, the color channels and the image-separating pass-bands have been explained. The digital multispectral color image 136 may be provided with a data set 232 representing the color space and the assignment of spectral bands to left and right stereoscopic color images. When recording the digital multispectral color image 136, each pixel 148 of the digital multispectral color image 602 records the light intensity in the image-separating pass-bands 216 by matching the spectral bands 224 to the image-separating pass-bands216.

In step 604, the digital multispectral color image 136 is stored, e.g. at the storage device 140, or further processed. A possible further process, namely extraction of left and right stereoscopic color images 122, 124 is shortly described with reference to Fig. 7. This process may take place any time after a digital multispectral color image is available.

In step 700, the digital stereoscopic multispectral color image is retrieved, e.g. from the storage device 140, the camera 113 and/or the image sensor 112.

In step 702, the left and right stereoscopic color images 122, 124, 300, 402 are extracted from the digital multispectral color image 136. Using e.g. the data set 234, i.e. depending on the assignment of the spectral bands 224 to different left and right stereoscopic color images 122, 124, 300, 402, the spectral bands 224 recorded at one pixel 148 of the digital multiscpectral color image 136 are assigned to the different left and right stereoscopic color images. The spectral bands 224 are matched to color channels R, G, B of a color space RGB, in which the left and right stereoscopic color images 122, 124, 300, 402 are displayed.

In step 704, the left and right stereoscopic color images may be stored, e.g. in the storage device 140, or displayed, e.g. on a stereoscopic display 126 of a stereoscopic viewer 120.

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus. Some or all of the method steps may be executed by (or using) a hardware apparatus, like for example, a processor, a microprocessor, a programmable computer or an electronic circuit. In some embodiments, some one or more of the most important method steps may be executed by such an apparatus.

Depending on certain implementation requirements, embodiments of the invention can be implemented in hardware or in software. The implementation can be performed using a non-transitory storage medium such as a digital storage medium, for example a floppy disc, a DVD, a Blu-Ray, a CD, a ROM, a PROM, and EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may, for example, be stored on a machine readable carrier.

Other embodiments comprise the computer program for performing one of the methods described herein, stored on a machine readable carrier.

In other words, an embodiment of the present invention is, therefore, a computer program having a program code for performing one of the methods described herein, when the computer program runs on a computer.

A further embodiment of the present invention is, therefore, a storage medium (or a data carrier, or a computer-readable medium) comprising, stored thereon, the computer program for performing one of the methods described herein when it is performed by a processor. The data carrier, the digital storage medium or the recorded medium are typically tangible and/or non-transition-ary. A further embodiment of the present invention is an apparatus as described herein comprising a processor and the storage medium.

A further embodiment of the invention is, therefore, a data stream or a sequence of signals representing the computer program for performing one of the methods described herein. The data stream or the sequence of signals may, for example, be configured to be transferred via a data communication connection, for example, via the internet.

A further embodiment comprises a processing means, for example, a computer or a programmable logic device, configured to, or adapted to, perform one of the methods described herein.

A further embodiment comprises a computer having installed thereon the computer program for performing one of the methods described herein.

A further embodiment according to the invention comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example, a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

**Parts List**

| | |
|---|---|
| 100 | optical assembly |
| 102 | observation device, 102a microscope |
| 104 | band-pass filter |
| 106 | optical path |
| 108 | object |
| 110 | field of view |
| 112 | image sensor |
| 113 | camera |
| 114 | objective |
| 116 | image or aperture plane |
| 118 | filter holder |
| 120 | stereoscopic viewer |
| 122 | left stereoscopic color image |
| 124 | right stereoscopic color image |
| 126 | stereoscopic display |
| 130 | image processing apparatus |
| 132 | general purpose computer |
| 134 | data exchange line |
| 136 | digital multispectral color image |
| 138 | image processor |
| 140 | storage device |
| 142 | data lines |
| 144 | display |
| 146 | digital stereoscopic color image |
| 148 | pixel |
| 200 | filter sector "1" |
| 202 | filter sector "2" |
| 204 | aperture |
| 205 | light-filtering area |
| 206 | region of band-pass filter |
| 208 | region of band-pass filter |
| 210 | light beam |
| 212 | viewing angle |
| 214 | sector set |
| 216 | image-separating pass-bands |
| 218 | bandwidth of image-separating pass-band |
| 220 | channel set |
| 222 | bandwidth of the color channel |
| 224 | spectral band |
| 226 | bandwidth of spectral band |
| 230 | information |
| 232 | data set representing color space of L and R |
| 234 | data set representing assignment of spectral bands to left or right stereoscopic color images |
| 300 | further stereoscopic color image |
| 302 | further filter sector |
| 304 | bandwidth of color channel |
| 400 | another filter sector |
| 402 | another stereoscopic color image |
| 600 | Filtering light from the object |
| 602 | Recording a digital multispectral color image |
| 604 | storing and post-processing the digital multispectral color image |
| 700 | retrieving a digital multispectral color image |
| 702 | extracting the left and right stereoscopic color images |
| 704 | Storing the stereoscopic color image |
| T | transmissivity |
| F | frequency |
| R,G,B | color channels |
| R1, G1, B1, R2 | image-separating pass-bands |

## Claims

1. Optical assembly (100) configured to record a digital multispectral color image (136) in a color space (RGB) having a number of predetermined color channels (R, G, B), the digital multispectral color image comprising at least one stereoscopic left and one stereoscopic right image (122, 124) in a color space (RGB), the color space having a number of predetermined color channels (R, G, B);
the optical assembly (100) comprising an optical band-pass filter (104), the band-pass filter (104) comprising at least two filter sectors (200, 202, 302, 400) in different regions (206, 208) of the band-pass filter (104);
each of the at least two filter sectors (200, 202, 302, 400) comprising a sector set (214) of different image-separating pass-bands (216);
wherein each color channel (R, G, B) overlaps an image-separating pass-band (216) of each of the sector sets (214)
and wherein the image-separating pass-bands (216) of different filter sectors (200, 202, 302, 400) that overlap with the same color channel (R, G, B) are different.

2. Optical assembly (100) according to claim 1, wherein the number of image-separating pass-bands (216) in a sector set (214) is at least as large as the number of color channels (R, G, B).

3. Optical assembly (100) according to claim 1 or 2, wherein the at least two filter sectors (200, 202, 302, 400) are of the same area.

4. Optical assembly (100) according to any one of claims 1 to 3, wherein each filter sector (200, 202, 302, 400) occupies a contiguous area of the band-pass filter (104).

5. Optical assembly (100) according to any one of claims 1 to 4, wherein the image-separating pass-bands (216) of different filter sectors (200, 202, 302, 400) that overlap with the same color channel (R, G, B) have the same bandwidth (218).

6. Optical assembly (100) according to any one of claims 1 to 5, wherein the image-separating pass-bands (216) of different filter sectors (200, 202, 302, 400) overlapping the same color channel (R, G, B) do not overlap.

7. Optical assembly (100) according to any one of claims 1 to 6, the number of different image-separating pass-bands (216) of the band-pass filter (104) that overlap with the same color channel (R, G, B) is at least as large the number of filter sectors (200, 202, 302, 400).

8. Optical assembly (100) according to any one of claims 1 to 7, wherein the color space (RGB) is based on an RGB color model and wherein the color channels (R, G, B) comprise a red, a green and a blue color channel (R, G, B).

9. Optical assembly (100) according to any one of claims 1 to 8, wherein 2, 3 or 4 filter sectors (200, 202, 302, 400) are provided.

10. Optical assembly (100) according to any one of claims 1 to 9, wherein the optical assembly (100) comprises an objective (114), the objective having an optical path (106), and wherein the band-pass filter (104) is located within the objective in the optical path.

11. Optical assembly (100) according to any one of claims 1 to 10, wherein the optical assembly (100) further comprises an image sensor (112) configured to record the digital multispectral color image (136) in the color space (RGB), the image sensor (112) comprising a plurality of spectral bands (224), each of the different image-separating pass-bands (216) of the band-pass filter (104) overlapping a different spectral band (224).

12. Image processing apparatus (130), wherein the image processing apparatus (130) is configured to retrieve a digital multispectral color image (136) recorded by an optical assembly (100) according to claim 11,
the image processing apparatus (130) being configured to obtain a left digital stereoscopic color image (120) from a first set of spectral bands (224) of the digital multispectral color image and a right digital stereoscopic color image (124) from a second set of spectral bands (224) of the digital multispectral color image, the second set of spectral bands (224) being different from the first set of spectral bands (224).

13. Image processing apparatus (130) according to claim 12, wherein the image processing apparatus (130) is configured to separate at least one of at least one further left and at least one further right stereoscopic color image (122, 124) from the digital multispectral color image (136) using a further set of spectral bands (224), the spectral bands (224) of the further set being different from the spectral bands (224) of the first and second set.

14. Optical observation device (102), such as a microscope (102a) or endoscope, wherein the optical observation comprises an optical assembly (100) according to any one of claims 1 to 11 and/or an image processing apparatus (130) according to claim 12 or 13.

15. Method of recording a digital multispectral color image (136), the digital multispectral color image comprising a left and a right stereoscopic color image (124), each in a color space (RGB) having a number of predetermined color channels (R, G, B),
wherein the left stereoscopic color image (122) is recorded in a first set of spectral bands (224) and the right stereoscopic color image (124) is recorded in a second set of spectral bands (224),
wherein the spectral bands (224) of the first set of spectral bands (224) are different from the spectral bands (224) of the second set of spectral bands (224),
and wherein each color channel (R, G, B) overlaps a different spectral band (224) of the first set of spectral bands (224) and each color channel (R, G, B) overlaps a different spectral band (224) of the second set of spectral bands (224).

16. Method of generating a left stereoscopic color image (122) and a right stereoscopic color image (124) from a digital multispectral color image (136) comprising pixels (148) and a predetermined number of spectral bands (224) at each pixel (148), the left and the right stereoscopic color images (122, 124) being composed in a color space (RGB) with predetermined color channels (R, G, B); the method comprising the steps of:
- retrieving the digital multispectral color image (136);
- obtaining the left stereoscopic color image (122) from a first set of spectral bands (224) of the digital multispectral color image;
- obtaining the right stereoscopic color image (124) from a second set of spectral bands (224) of the digital multispectral color image, the second set being different from the first set,
- mapping the spectral bands (224) to the color channel (R, G, B) of the color space (RGB) of the left and the right stereoscopic color image (124).

17. Computer program with a program code for performing the method according to claim 16 when the computer program runs on a processor.
